# FASCICULE DE BREVET EUROPEEN

(11) **EP 0 461 982 B1**
(45) Date de publication et mention de la délivrance du brevet: **22.03.1995**
(21) Numéro de dépôt: 91401526.8
(22) Date de dépôt: 10.06.1991
(51) Int. Cl.: H02H 5/00

(54) **Procédé pour la prolongation de la durée de fonctionnement d'un circuit à composants mos soumis à un rayonnement "gamma"**
Verfahren zum Verlängern der Lebensdauer einer mit "Gamma"-Strahlung ausgesetzten Schaltung mit MOS-Komponenten
Method for extension of the life time of a circuit with MOS-components subject to "Gamma" radiation

(30) Priorité: 12.06.1990 FR 9007287
(43) Date de publication de la demande: 18.12.1991
(73) Titulaire: COMMISSARIAT A L'ENERGIE ATOMIQUE, 75015 Paris (FR)
(72) Inventeur: Joffre, Francis, F-91440 Bures sur Yvette (FR)
(74) Mandataire: Poulin, Gérard

(56) Documents cités:
- FR-A- 2 421 493

## Description

La présente invention a pour objet un procédé pour la prolongation de la durée de fonctionnement d'un circuit à composants MOS soumis à un rayonnement "gamma". Elle s'applique notamment à des circuits à composants MOS ("metal-oxyde semiconductor", semi-conducteur à grille isolée par oxyde métallique en terminologie anglosaxonne) et plus particulièrement CMOS (compatible MOS) destinés à piloter et commander des robots utilisés pour des interventions sur des sites nucléaires (centrales nulécaires, usines de retraitement ...)

Les rayonnements "gamma" détériorent les circuits électroniques à composants MOS ; le principal effet est la création de paires d'électron et de trou. Ces charges peuvent s'accumuler dans les composants, au point de donner lieu à des arcs électriques qui détruisent le composant.

On connaît des circuits fabriqués spécialement pour résister aux diverses radiations. Les composants de ces circuits sont fabriqués sur des substrats isolants du type connu sous le sigle SOS, acronyme de "Silicon on Sapphire". (Silicium sur Saphir en terminologie anglosaxonne).

Mais ces circuits, fabriqués pour un usage spatial ou militaire sont difficilement disponibles et leur coût est d'environ cent fois supérieur au coût d'un circuit équivalent réalisé dans une technologie usuelle.

D'autre part, la gamme de circuits MOS/SOS est limitée et bien souvent les circuits proposés présentent des performances bien inférieures à celles des circuits usuels.

Enfin, les circuits fabriqués à partir d'une technologie MOS/SOS ont été développés surtout pour résister à l'effet "latch-up" (terminologie anglosaxonne usuelle pour désigner un effet "thyristor") et ainsi éviter des courts-circuits internes résultant d'un rayonnement "gamma" impulsionnel et intense.

Dans des applications civiles relatives au domaine nucléaire, les circuits utilisés doivent être à même de résister, non pas à l'effet "latch-up" mais plutôt à un rayonnement "gamma" continu qui n'est d'ailleurs pas le plus nocif lorsqu'il est très intense.

La garantie d'un bon fonctionnement au-dessous d'un seuil de 100 krad de dose cumulée de rayonnement "gamma" est une spécification usuelle dans les applications nucléaires civiles. Les circuits MOS atteignent rarement cet objectif, dans des conditions normales d'utilisation.

La présente invention pallie ces divers inconvénients. Elle permet, pour un coût modique et avec des composants MOS usuels, de garantir un bon fonctionnement d'un circuit au-dessous d'un seuil de 100 krad de dose cumulée de rayonnement "gamma" et même au-dessus de ce seuil pour certains composants.

On connaît déjà le document FR-A-2 421 493 qui décrit un procédé et un dispositif pour protéger le contenu de mémoires vives vis-à-vis des rayonnements nucléaires et notamment des rayonnements gamma.

En fait, c'est un dispositif qui permet, grâce à une redondance de mémorisation, de récupérer les données, contenues dans une mémoire alimentée, et qui aurait pu être effacée par un flash nucléaire (voir lignes 10 à 15, page 1, lignes 10 à 14, page 8 et lignes 17 à 21, page 8).

La protection des circuits électroniques ne fonctionne donc pas sur le principe d'alternance comme c'est le cas dans la présente demande, mais utilise un détecteur de rayonnement qui a pour rôle de bloquer l'activation des mémoires et d'arrêter le fonctionnement des mémoires activées si le débit de doses dépasse un certain seuil.

Dans le cas de la présente demande, le procédé consiste à prolonger la durée de fonctionnement d'un système avec l'obligation d'assurer en permanence la tache prévue. L'invention revendiquée dans la rpésente demande se distingue du document FR-A-2 421 493 dans le problème à résoudre, à savoir le type de perturbation visée qui est une dose cumulée et non pas un débit de dose instantanée comme dans l'antériorité. Il s'en distingue également par les éléments à protéger contre une telle perturbation, à savoir les circuits eux-mêmes dans la demande et les informations stockées dans l'antériorité. On peut encore noter que à ce titre, la technologie visée dans la demande concerne des circuits MOS, alors que dans l'antériorité, il s'agit de mémoire magnétique.

Sur le plan du fonctionnement du système, on peut noter que celui-ci est interrompu dans l'antériorité alors qu'il est ininterrompu dans l'invention.

Le procédé de l'invention s'appuie sur des phénomènes physiques connus :
1) les composants MOS se dégradent moins vite sous irradiation "gamma" lorsqu'ils ne sont pas sous tension ;
2) les composants MOS peuvent récupérer partiellement ou totalement leurs caractéristiques originelles après irradiation. Cette récupération est fonction du temps et de la température.

Le procédé de l'invention met aussi à profit un phénomène inattendu observé par l'inventeur : des composants MOS soumis à des rayonnements "gamma", mais hors tension, peuvent récupérer partiellement ou totalement leurs caractéristiques originelles après avoir été dégradés lorsqu'ils étaient sous tension.

Le procédé de l'invention préconise l'usage de plusieurs systèmes similaires à composants MOS. Ces systèmes sont mis sous tension à tour de rôle : lorsque l'un d'eux est mis sous tension, les autres sont mis hors tension et peuvent donc 'récupérer leurs caractéristiques originelles. De cette manière, on augmente la durée de vie de chacun des systèmes et le circuit formé par l'ensemble des systèmes remplit sa fonction pendant une durée prolongée.

De manière plus précise, la présente invention concerne un procédé pour la prolongation de la durée de fonctionnement d'un circuit à composants MOS soumis à un rayonnement "gamma".

Ce procédé se caractérise en ce que le circuit comprenant au moins deux systèmes identiques à composants MOS consiste à mettre sous tension alternativement et pendant une durée déterminée chaque système constituant ledit circuit, la durée de mise sous tension étant inférieure à une durée de seuil au-delà de laquelle le système considéré est complètement dégradé, et chaque système mis hors tension étant aussi isolé du reste du circuit.

Par système, on entend le domaine allant d'un composant isolé ou fraction de circuit intégré jusqu'au montage complexe constitué d'une grande quantité de composants.

Un tel circuit, constitué de plusieurs systèmes, présente, sous une irradiation "gamma", une durée de fonctionnement supérieure à la somme des durées de fonctionnement de chacun des systèmes pris séparément.

De manière avantageuse, la durée de mise sous tension est inférieure à une durée de seuil au-delà de laquelle le système est complètement dégradé. La durée de seuil dépend du système et du débit de dose auquel ce dernier est soumis. On constate que de faibles débits de dose détériorent plus les systèmes que de forts débits de dose.

Un fort débit entraîne la génération d'un nombre important de paires "électron-trou" et les charges en présence ont une forte probabilité de recombinaison. Par contre, pour un faible débit, la recombinaison est moins probable et donne lieu à des accumulations de charges aboutissant à la formation d'arcs électriques internes destructeurs.

Dans tous les cas, la mise hors tension d'un système bien avant l'écoulement de la durée de seuil permet d'obtenir un recouvrement plus complet des caractéristiques originelles.

Un système mis hors tension est aussi isolé du reste du circuit pour éviter tout échange intempestif de charge électrique.

Selon une variante du procédé, on établit à chaque mise sous tension d'un système, un échange d'informations entre le système mis sous tension et le système antérieurement sous tension.

Cette variante concerne essentiellement les systèmes complexes comme les microprocesseurs ou les microcontrôleurs. Selon un mode de réalisation avantageux, les durées de fonctionnement des différents systèmes se chevauchent. Ainsi, à la fin de sa phase de fonctionnement, un système transmet les informations acquises ou traitées au système qui vient d'être mis sous tension. Cela permet d'assurer la continuité de fonctionnement de l'ensemble.

Selon un autre mode de réalisation, le système sous tension peut écrire les informations devant être transmises dans une mémoire. Cette mémoire est lue dès la mise sous tension du système suivant.

De toutes façons, les caractéristiques et avantages de l'invention apparaîtront mieux après la description qui suit donnée à titre explicatif et nullement limitatif. Cette description se réfère à des dessins annexés, sur lesquels :
- la figure 1 représente schématiquement un circuit pour la mise en oeuvre du procédé selon l'invention ;
- la figure 2 représente schématiquement un montage électronique réalisant un interrupteur ;
- la figure 3 représente schématiquement une séquence d'alimentation du circuit de la figure 1.

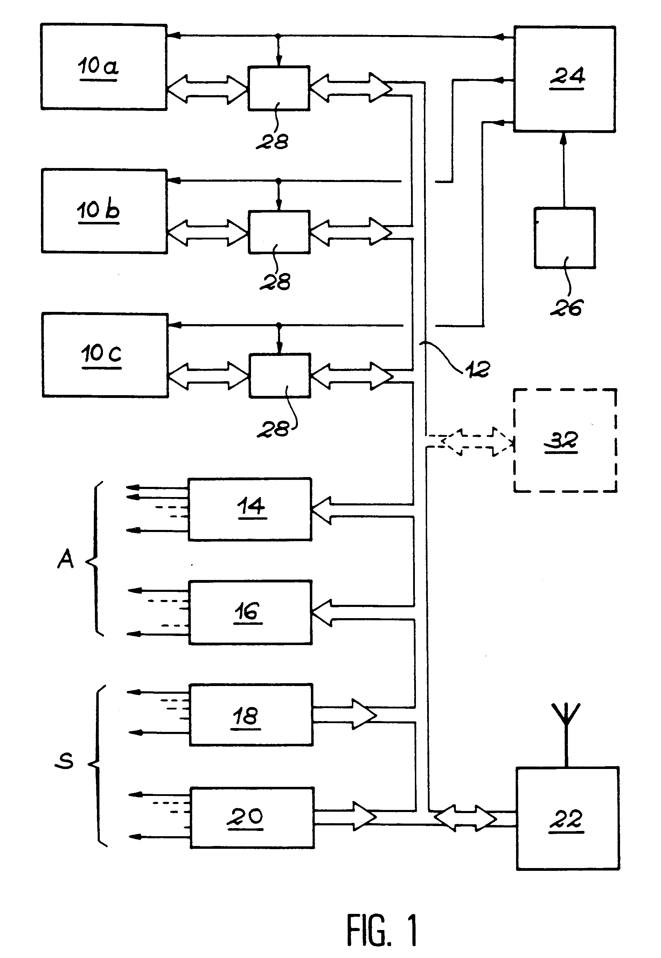

La figure 1 représente schématiquement un circuit à composants MOS pour la mise en oeuvre du procédé selon l'invention. Ce circuit peut, par exemple, commander les déplacements et les actions d'un robot d'intervention dans une centrale nucléaire. Un tel robot est amené à travailler dans des zones soumises à des rayonnements "gamma".

Le circuit représenté comporte trois systèmes identiques, trois micro-ordinateurs 10a, 10b, 10c, constitués chacun d'un microcontrôleur, par exemple du type CDP 68 EM05C 4 commercialisé par la Société RCA, connecté à une mémoire PROM du type HM1 6617-9 commercialisée par la Société Harris.

Chacun de ces micro-ordinateurs 10a, 10b, 10c est connecté par l'intermédiaire d'un bus 12 à un premier et un second modules 14, 16 d'interface avec des actionneurs (non représentés individuellement mais symbolisés par la lettre A) et à un premier et un second modules 18, 20 d'interface avec des capteurs (non représentés individuellement mais symbolisés par la lettre S).

Le premier module 14 d'interface avec des actionneurs présente des sorties parallèles logiques et permet la commande d'actionneurs, du type électrovanne par exemple.

Le second module 16 d'interface avec des actionneurs présente des sorties analogiques et permet la commande d'actionneurs du type moteur, vérin par exemple.

Le premier module 18 d'interface avec des capteurs présente des entrées parallèles logiques et permet la connexion avec des capteurs du type interrupteur par exemple.

Le second module 20 d'interface avec des capteurs présente des entrées analogiques et permet la connexion avec des capteurs du type capteur de distance à ultrasons, de température, de débit de dose par exemple.

Le bus 12 est encore connecté à un module de communications extérieures 22 permettant la connexion, par émission radioélectrique ou par raccordement câblé, avec un ordinateur central (non représenté).

Un séquenceur d'alimentation 24, par exemple un système motorisé à cames, est relié d'une part à une source d'alimentation électrique 26 et d'autre part à chacun des micro-ordinateurs 10a, 10b, 10c. Il permet la mise sous tension de chacun des micro-ordinateurs, alternativement. Un module d'interface 28 réalisant un interrupteur permet d'isoler un micro-ordinateur auquel il est relié du reste du circuit, lorsque le micro-ordinateur concerné est hors tension.

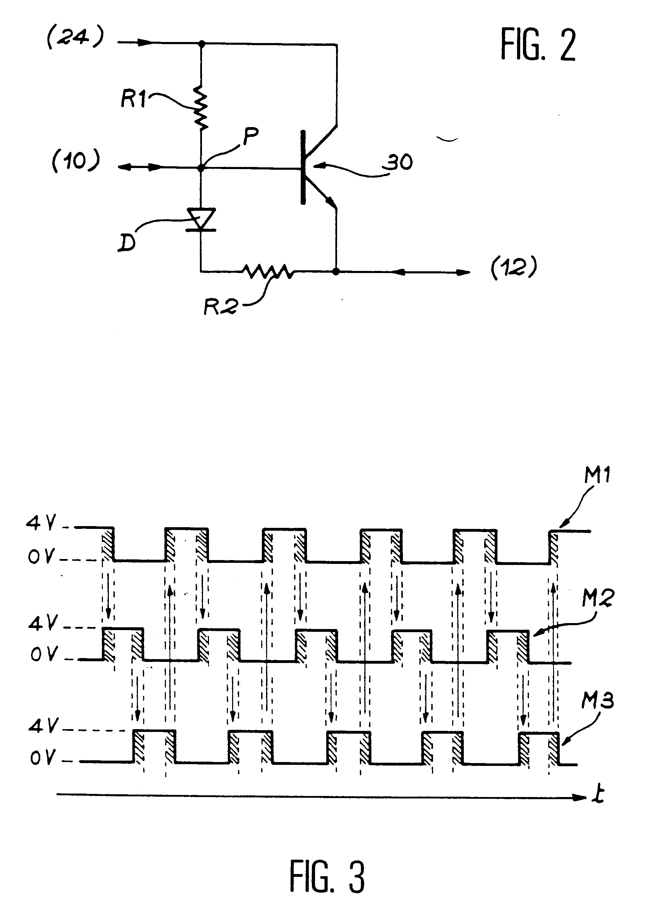

La figure 2 représente schématiquement un interrupteur connu pouvant être utilisé dans le module 28. Un tel interrupteur est relié à chacun des fils du bus 12 et à chacun des ports du micro-ordinateur (référencé 10 sur cette figure).

Cet interrupteur est principalement constitué d'un transistor 30, par exemple du type 2N2222 fonctionnant en "saturé-bloqué". Le port du micro-ordinateur 10 concerné est relié en un point P à la base du transistor 30 ; le collecteur du transistor, connecté au séquenceur 24, est relié au point P par une résistance R1, par exemple de 100 kΩ ; l'émetteur du transistor, connecté au bus 12, est relié au point P par une diode D, par exemple du type BAT 48 commercialisée par la Société Thomson et connectée en série à une résistance R2 par exemple de 4,7 kΩ .

Lorsque l'alimentation est coupée par le séquenceur 24, chaque interrupteur isole indépendamment un port d'entrée/sortie du micro-ordinateur concerné.

En référence à la figure 3, on décrit maintenant une séquence d'alimentation des micro-ordinateurs 10a, 10b, 10c. Les séquences M1, M2, M3 se rapportent respectivement aux micro-ordinateurs 10a, 10b, 10c. A tour de rôle, chaque micro-ordinateur est mis sous tension, par exemple sous 4 V, pendant une durée déterminée.

Cette durée dépend des composants utilisés : elle est inférieure à une durée de seuil, déterminée par des tests préalables, à partir de laquelle les composants utilisés sont complètement dégradés par le rayonnement "gamma" auquel ils sont soumis. Chaque palier d'alimentation peut, par exemple, durer 10 mn.

On voit sur la figure 3 que les paliers d'alimentation de séquences M1, M2, M3 se chevauchent (zones hachurées). Cette durée pendant laquelle deux micro-ordinateurs sont mis sous tension simultanément, permet un échange d'informations et une passation de consignes (symbolisés par des flèches sur la figure 3) entre le micro-ordinateur qui va être mis hors tension et celui qui vient d'être mis sous tension. On assure ainsi une continuité dans le fonctionnement du robot commandé par le circuit.

De retour à la figure 1, on a représenté en pointillé une mémoire 32 reliée au bus 12 permettant un échange d'informations sans avoir recours à un chevauchement des paliers d'alimentation.

Au cours de leurs périodes de fonctionnement, les micro-ordinateurs écrivent en mémoire 32 les informations à transmettre. Dès qu'un micro-ordinateur est mis en service, il lit les informations contenues en mémoire 32, de manière à poursuivre les opérations de commande et de gestion en cours. Les temps de lecture/écriture sont suffisamment courts pour permettre une quasi-continuité dans ces opérations.

Pour un débit de dose de 500 rad/h, un circuit du type de celui représenté sur la figure 1 (sans mémoire 32 mais avec une passation de consignes pendant un chevauchement des paliers d'alimentation) est capable de fonctionner pour une dose cumulée supérieure à 100 krad (160 krad ont été obtenus lors de tests, 140 krad étant une valeur obtenue de façon reproductible) alors qu'un micro-ordinateur utilisé en régime continu est incapable d'atteindre 20 krad dans les mêmes conditions d'irradiation.

Le circuit décrit précédemment n'est donné qu'à titre d'exemple non limitatif ; en particulier le nombre de systèmes identiques (ici trois micro-ordinateurs) peut varier suivant les composants choisis ; il est par ailleurs inutile d'augmenter le nombre de systèmes au-delà des besoins en temps de récupération de chacun des systèmes.

L'invention admet aussi d'autres variantes. Par exemple, la durée des paliers d'alimentation n'est pas obligatoirement fixe ; elle peut varier en fonction du débit de dose auquel est soumis le circuit : la durée de chaque palier doit être plus courte si le débit de dose augmente. Dans cette variante, un capteur permet la mesure du débit de dose. Un dispositif de commande relié au capteur et au séquenceur impose la durée des paliers d'alimentation en fonction de la mesure. Dans ce cas, le séquenceur doit être choisi d'un type permettant des paliers d'alimentation de durée variable.

Le procédé de l'invention s'applique de façon préférentielle à tous les composants MOS qui, après des tests préliminaires d'irradiation sans alimentation électrique montrent qu'ils récupèrent leurs caractéristiques originelles relativement vite et à une température de 20°C.

Le procédé de l'invention peut être mis en oeuvre avec des composants MOS de tout type : NMOS, PMOS, CMOS, HCMOS ("high speed CMOS", composant CMOS rapide en terminologie anglosaxonne) mais aussi des circuits logiques du type ACMOS ("advanced CMOS", circuit logique CMOS perfectionné en terminologie anglosaxonne) et encore des composants du type CMOS/SOS.

## Revendications

1. Procédé pour la prolongation de la durée de fonctionnement d'un circuit à composants MOS soumis à un rayonnement "gamma", caractérisé en ce que, le circuit comprenant au moins deux systèmes (10a, 10b, 10c) identiques à composants MOS, il consiste à mettre sous tension alternativement et pendant une durée déterminée chaque système constituant ledit circuit, la durée de mise sous tension étant inférieure à une durée de seuil au-delà de laquelle le système considéré est complètement dégradé, et chaque système mis hors tension étant aussi isolé du reste du circuit.

2. Procédé selon la revendication 1, caractérisé en ce qu'il consiste à établir, à chaque mise sous tension d'un système, un échange d'informations entre le système mis sous tension et le système antérieurement sous tension.

3. Procédé selon la revendication 2, caractérisé en ce que l'échange d'informations s'effectue lors d'un chevauchement des durées de mise sous tension.

4. Procédé selon la revendication 2, caractérisé en ce que l'échange d'informations s'effectue par écriture des informations à échanger dans une mémoire (32) intermédiaire puis par lecture de cette mémoire (32) par le système venant d'être mis sous tension.

## Patentansprüche

1. Verfahren zum Verlängern der Lebensdauer einer "Gamma"-Strahlung ausgesetzten Schaltung mit MOS-Komponenten, **dadurch gekennzeichnet**, wobei die Schaltung wenigstens zwei Systeme (10a, 10b, 10c) mit MOS-Komponenten umfaßt, daß es darin besteht, jedes diese Schaltung bildende System wechselweise und während einer bestimmten Dauer unter Spannung zu setzen, wobei die Dauer des Unterspannungsetzens kleiner ist als eine Schwellendauer, jenseits der das betreffende System vollständig beschädigt wird, und jedes System, wenn es nicht mehr unter Spannung steht, auch vom Rest der Schaltung isoliert ist.

2. Verfahren nach Anspruch 1, dadurch gekennzeichnet, daß es darin besteht, bei jedem Unterspannungsetzen eines Systems einen Informationsaustausch herzustellen zwischen dem unter Spannung stehenden System und dem System, das vorhergehend unter Spannung stand.

3. Verfahren nach Anspruch 2, dadurch gekennzeichnet, daß der Informationsaustausch erfolgt während einer Überlappung der Unterspannungsetzungszeiten.

4. Verfahren nach Anspruch 2, dadurch gekennzeichnet, daß der Informationsaustausch durch Einschreiben der auszutauschenden Informationen in einen Zwischensspeicher (32) erfolgt, sodann durch Lesen dieses Speichers (32) durch das System, das soeben unter Spannung gesetzt wurde.

## Claims

1. Process for extending the operating period of a circuit having MOS components exposed to gamma radiation, characterized in that the circuit has at least two identical MOS component systems (10a, 10b, 10c) and consists of alternately switching on for a predetermined period each system constituting the said circuit, the on period being shorter than a threshold period beyond which the system in question is completely deteriorated and each system which is switched off is also isolated from the remainder of the circuit.

2. Process according to claim 1, characterized in that it consists of establishing, for each switching on of a system, an information exchange between the live system and the system which was previously live.

3. Process according to claim 2, characterized in that the information exchange takes place during an overlap of the live periods.

4. Process according to claim 2, characterized in that the information exchange takes place by writing the informations to be exchanged into an intermediate memory (32) and then through the reading of said memory (32) by the system which has just been switched on.
